# EUROPEAN PATENT SPECIFICATION

(11) **EP 0 879 736 B1**
(45) Date of publication and mention of the grant of the patent: **17.07.2002**
(21) Application number: 98303507.2
(22) Date of filing: 05.05.1998
(51) Int. Cl.: B60Q 1/26

(54) **Warning lamp**
Warnleuchte
Lampe d'avertissement

(30) Priority: 24.05.1997 GB 9710653
(43) Date of publication of application: 25.11.1998
(73) Proprietor: Britax PMG Limited, Warwick CV34 6DE (GB)
(72) Inventor: Holdsworth, Melvyn, Birdlington, N. Humberside, YO16 5RA (GB); Moorfoot, Richard, Church House, Little Driffield, YO25 7XE (GB)
(74) Representative: Hollinghurst, Antony

(56) References cited:
- EP-A- 0 398 549
- GB-A- 2 160 303
- GB-A- 2 292 792
- GB-A- 2 295 640

## Description

This invention relates to a warning lamp of the type having a reflector mounted on a rotary platform which is driven by an electric motor.

European regulations specify that the rate of flashing of warning lights of this type shall be in the range of 2 Hz to 4 Hz. In order to allow for fluctuations in vehicle supply voltage, it is usual to aim to provide a flash rate of about 3 Hz at the nominal voltage. In contrast, United States regulations specify a flash rate of 1.5 Hz. It is known to provide a single beacon capable of meeting both of these requirements by having a stepped pulley on the output shaft of the electric motor, a larger diameter part of the pulley being used when a flash rate of 3 Hz is required and a smaller diameter part being used when a flash rate of 1.5 Hz is required.

It is also known from GB-A-2292792, showing the preamble of claim 1, to use a stepped pulley to enable a warning light to provide an output at one selected flash rate, both on a vehicle having a 12 volt supply and on a vehicle having a 24 volt supply.

It has been found that, during maintenance, for example bulb replacement, there is a significant risk that the drive belt will be dislodged and replaced on the wrong part of the stepped pulley, with the result that the warning lamp then operates at an illegal flash rate. In the case of warning lamps intended to operate with a range of supply voltages, it was previously customary to provide electronic voltage regulators. Recently introduced enhanced standards of electromagnetic compatibility has increased the costs of such voltage regulators to the extent that they are uneconomic.

According to the invention, a warning lamp has a reflector mounted on a rotary platform which is journalled on a stationary vertical shaft, a light source mounted so as to produce a horizontal light beam from the reflector, an electric motor driving a pulley, a flexible belt coupling the pulley to the platform, and a removable tyre fitted to the pulley so that the effective diameter of the pulley can be varied by removing and replacing the tyre.

Preferably, the pulley has a V-shaped groove shaped to minimise slippage of the belt and the tyre has a correspondingly shaped groove in its outer surface. The tyre may have a projection on its inner surface shaped to engage in the groove in the pulley.

An embodiment of the invention will now be described, by way of example, with reference to the accompanying drawings, in which:
Figure 1 is a partially broken-away side view of a warning lamp in accordance with the invention, with a tyre in place on its drive pulley;
Figure 2 is a part elevational, part sectional view of the pulley and tyre shown in Figure 1;
Figure 3 is a similar view to Figure 2, showing the tyre without the pulley;
Figure 4 is a similar view to Figure 2 showing the pulley without the tyre; and
Figure 5 is a scrap side view of the drive pulley and belt of the beacon shown in Figure 1, but with the tyre removed.

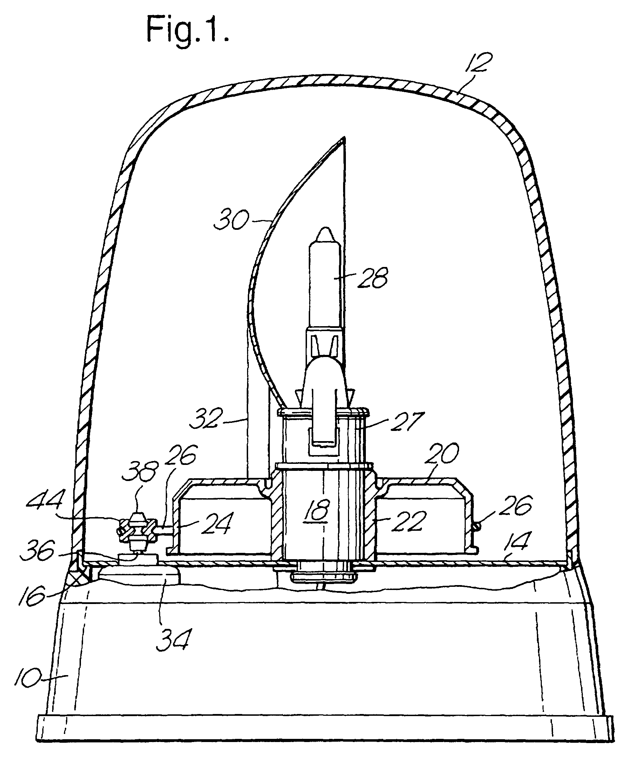

Referring to Figure 1, a warning lamp in accordance with the invention has a hollow frusto-conical base housing 10 and a translucent dome-like cover 12, both formed from plastics material. The base housing 10 is opaque, while the cover 12 is coloured in accordance with the required colour of the light from the lamp.

A metal chassis plate 14 is mounted on a shoulder 16 within the base housing. A stationary shaft 18 projects upwardly from the centre of the chassis plate 14 and has a reflector platform 20 journalled thereon. The reflector platform 20 has an inner hub portion 22 which engages round the shaft 18, and an outer flange portion 24 which serves as a pulley for a flexible belt 26.

A bulb holder 27 is mounted on the top of the shaft 18 and supports a bulb 28. A parabolic or hyperbolic reflector 30 is mounted on the platform 20 by means of legs such as the leg 32 so that its focus is coincident with the filament of the bulb 28. The reflector 30 thus produces a generally horizontal beam of light which rotates with the platform 20.

An electric motor 34 is mounted on the underside of the mounting plate 14 with its drive shaft 36 oriented vertically and projecting above the plate 14.

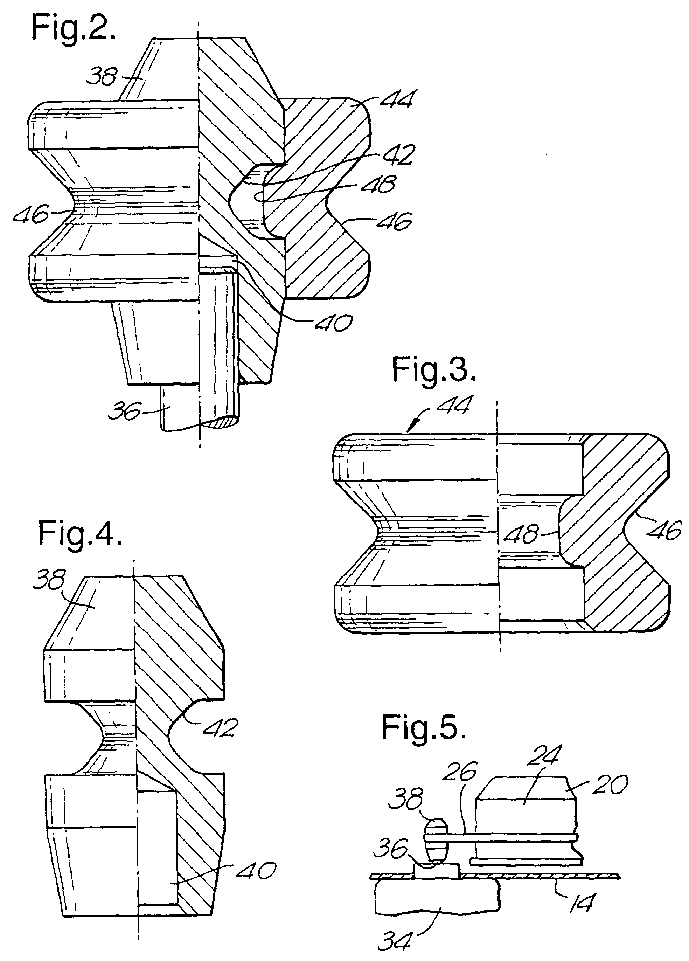

As can best be seen from Figures 2-4, a pulley 38 has a central bore 40 which is a firm interference fit on the shaft 36 so that the pulley 38 is rotationally fast therewith. Just above the level of the top of the shaft 40, the pulley 38 has a V-shaped groove 42.

A rubber tyre 44 is removably fitted onto the pulley 38. The tyre 44 has an outer groove 46 of same shape as the groove 42 and an inwardly extending projection 48 which is received in the groove 42 of the pulley so as to retain the tyre 44 captive thereon.

Reverting to Figure 1, when the tyre 44 is in place and the drive belt 26 engages in the groove 46, the electric motor 34 causes the reflector 30 to rotate at a first rate. On the other hand, if the tyre 44 is removed and the drive belt 26 engages directly in the groove 42 in the pulley 38, as shown in Figure 5, the motor 34 causes the reflector 30 to rotate at a second rate, slower than the first rate.

The decision on whether or not to remove the tyre 44 is made when the beacon is installed. Although the tyre can readily be peeled off during installation, it cannot easily be dislodged accidentally. Consequently, there is minimal risk of an inexperienced person carrying out bulb replacement inadvertently setting the beacon to flash at an illegal rate.

The invention is equally applicable to beacons providing a single flashing light and to light bars having multiple flashing lights.

## Claims

1. A warning lamp having a reflector (30) mounted on a rotary platform (20) which is journalled on a stationary vertical shaft (18), a light source (28) mounted so as to produce a horizontal light beam from the reflector (30), an electric motor (34) driving a pulley (38), and a flexible belt (26) coupling the pulley (38) to the platform (20), **characterised in that** a removable tyre (44) is fitted to the pulley (38) so that the effective diameter of the pulley (38) can be varied by removing and replacing the tyre (44).

2. A warning lamp according to claim 1, wherein the pulley (38) has a V-shaped groove (42) shaped to minimise slippage of the belt (26), and the tyre (44) has a correspondingly shaped groove (46) in its outer surface.

3. A warning lamp according to claim 2, wherein the tyre (44) has a projection (48) on its inner surface shaped to engage in the groove (42) in the pulley (38).

## Patentansprüche

1. Warnleuchte mit einem auf einer Drehplattform (20) angeordneten Reflektor (30), welcher auf einer feststehenden vertikalen Achse (18) drehbar gelagert ist, einer Lichtquelle (28), welche derart angeordnet ist, dass ein horizontaler Lichtstrahl von dem Reflektor (30) erzeugt wird, und einem elektrischen Motor (34), welcher eine Antriebsrolle (38), einen die Antriebsrolle (38) an die Plattform (20) koppelnden fexiblen Riemen (26), und einen abnehmbaren Reifen (44) antreibt, der so an der Antriebsrolle (38) angebracht ist, dass der effektive Durchmesser der Antriebsrolle (38) durch Entfernen und Ersetzen des Reifens (44) variiert werden kann.

2. Warnleuchte gemäß Anspruch 1, **dadurch gekennzeichnet, dass** der Antriebsrolle (38) eine V-förmige Nut (42) zum Minimieren des Rutschens des Riemens (26) und der Reifen (44) eine entsprechend geformte Nut (46) in seiner äußeren Oberfläche aufweist.

3. Warnleuchte gemäß Anspruch 2, **dadurch gekennzeichnet, dass** der Reifen (44) eine entsprechend geformte Ausformung (48) an seiner inneren Oberfläche zum Eingreifen in die Nut (42) der Antriebsrolle (38) aufweist.

## Revendications

1. Lampe d'avertissement ayant un réflecteur (30) monté sur une plate-forme rotative (20) qui est tourillonnée sur un arbre vertical stationnaire (18), une source de lumière (28) montée de manière à produire un faisceau de lumière horizontal à partir du réflecteur (30), un moteur électrique (34) entraînant une poulie (38), et une courroie souple (26) accouplant la poulie (38) à la plate-forme (20), **caractérisée en ce qu'**un bandage amovible (44) est agencé sur la poulie (38), de sorte que le diamètre effectif de la poulie (38) peut être modifié en enlevant et en remplaçant le bandage (44).

2. Lampe d'avertissement selon la revendication 1, dans laquelle la poulie (38) a une gorge en forme de V (42) mise en forme pour minimiser le glissement de la courroie (26), et le bandage (44) a une gorge mise en forme de manière correspondante (46) dans sa surface extérieure.

3. Lampe d'avertissement selon la revendication 2, dans laquelle le bandage (44) a une saillie (48) sur sa surface intérieure, mise en forme pour venir en contact dans la gorge (42) située dans la poulie (38).
